# EUROPEAN PATENT APPLICATION

(11) **EP 4 546 303 A1**
(43) Date of publication of application: **30.04.2025**
(21) Application number: 24197832.9
(22) Date of filing: 02.09.2024
(51) Int. Cl.: G08G 1/0962, G06V 20/58, G08G 1/0967

(54) **INFORMATION PROVIDING APPARATUS, INFORMATION PROVIDING METHOD, AND STORAGE MEDIUM STORING INFORMATION PROVIDING PROGRAM**

(30) Priority: 26.10.2023 JP 2023183976
(71) Applicant: TOYOTA JIDOSHA KABUSHIKI KAISHA, Aichi-ken, 471-8571 (JP)
(72) Inventor: SAITO, Hiroki, Toyota-shi, 471-8571 (JP)
(74) Representative: J A Kemp LLP

(57) **Abstract**

An information providing apparatus (10) notifies an operator of an own vehicle (100) of an applied traffic regulation to be applied to the own vehicle (100). The information providing apparatus (100) acquires an image-recognized traffic regulation by an image recognition of recognizing a captured image of a view ahead of the own vehicle (100). The image-recognized traffic regulation is displayed in a road sign captured in the captured image and is to be applied to vehicles travelling in a traffic lane where the own vehicle (100) is travelling. The information providing apparatus (10) acquires positional information on a current position of the own vehicle (100), acquires the applied traffic regulation based on the positional information, the image-recognized traffic regulation, and vehicle information on an attribute of the own vehicle (100), and notifies the operator of the own vehicle (100) of the acquired applied traffic regulation.

## Description

### BACKGROUND

### Field

The present invention relates to an information providing apparatus, an information providing method, and a storage medium storing an information providing program.

### Description of the related art

There is known an information providing apparatus configured to (i) acquire camera images capturing road signs displaying speed limits by a camera sensor, (ii) recognize the speed limit from the road sign captured in the acquired camera image, and (iii) notify a driver of an own vehicle of the speed limit by displaying the recognized speed limit on a display (for example refer to JP 2017-62696 A).

In some areas or countries, the speed limit displayed in the road sign does not target some vehicles, depending on attributes of the vehicles. In such areas or countries, when the speed limit recognized from the road sign is displayed on the display, the driver is notified of the wrong speed limit.

### SUMMARY

An object of the present invention is to provide an information providing apparatus, an information providing method, and a storage medium storing an information providing program which can notify an operator of an own vehicle of the appropriate speed limit to be applied to the own vehicle.

According to the present invention, an information providing apparatus comprises an electronic control unit configured to notify an operator of an own vehicle of an applied traffic regulation which is a traffic regulation to be applied to the own vehicle. The electronic control unit is configured to acquire an image-recognized traffic regulation by an image recognition of recognizing a captured image of a view ahead of the own vehicle. The image-recognized traffic regulation is the traffic regulation which is displayed in a road sign captured in the captured image and is to be applied to vehicles travelling in a traffic lane where the own vehicle is travelling. The electronic control unit is configured to acquire positional information on a current position of the own vehicle, acquire the applied traffic regulation based on (i) the positional information, (ii) the image-recognized traffic regulation, and (iii) vehicle information on an attribute of the own vehicle, and notify the operator of the own vehicle of the acquired applied traffic regulation.

In some countries or areas, the different traffic regulations are applied to vehicles, depending on attributes of the vehicles even when the vehicles travel in the same traffic lane. In these countries or areas, the road sign installed on a road may not display all the traffic regulations to be applied to all the vehicles having the different attributes. In these countries or areas, the road sign installed on the road may display only one representative traffic regulation. In such countries or areas, when the operator of the vehicle is notified of the traffic regulation displayed in the road sign acquired by the image recognition, the operator may be notified of the traffic regulation not to be applied to the vehicle.

The information providing apparatus according to the present invention notifies the operator of the own vehicle of the traffic regulation, depending on (i) the attribute of the own vehicle and (ii) the positional information (i.e., the current position of the own vehicle). Thus, the information providing apparatus can notify the operator of the own vehicle of the appropriate traffic regulation.

In the information providing apparatus according to an aspect of the present invention, the electronic control unit may be configured not to notify the operator of the applied traffic regulation when the road sign acquired from the captured image by the image recognition does not target the own vehicle even when the electronic control unit acquires the applied traffic regulation based on the image-recognized traffic regulation acquired from the road sign.

The information providing apparatus according to this aspect of the present invention does not notify the operator of the own vehicle of the traffic regulation which does not target the own vehicle. Thus, the information providing apparatus does not notify the operator of the own vehicle of the wrong traffic regulation.

In the information providing apparatus according to another aspect of the present invention, the electronic control unit may include at least one converting device which converts the image-recognized traffic regulation to the applied traffic regulation based on (i) the vehicle information and (ii) the positional information. The electronic control unit may be configured to acquire the applied traffic regulation by converting the image-recognized traffic regulation by the at least one converting device based on (i) the vehicle information and (ii) the positional information.

The information providing apparatus according to this aspect of the present invention can acquire the traffic regulation to be applied to the own vehicle by converting the traffic regulation acquired from the road sing by the image recognition by the converting device.

In the information providing apparatus according to further another aspect of the present invention, the vehicle information may include, as the vehicle information, (i) vehicle application information on an application of the own vehicle and (ii) vehicle specification information on a specification of the own vehicle. The electronic control unit may include converting devices which are prepared for every combination of (i) an application of a vehicle and (ii) a specification of a vehicle and convert the traffic regulation displayed in the road sign to the traffic regulation to be applied to a target vehicle based on a current position of the target vehicle. The electronic control unit may be configured to select, from the converting devices, the converting device dedicated to a combination of (i) the application of the own vehicle and (ii) the specification of the own vehicle based on (i) the vehicle application information and (ii) the vehicle specification information, and acquire the applied traffic regulation by converting the image-recognized traffic regulation by the selected converting device based on the current position of the own vehicle.

The information providing apparatus according to this aspect of the present invention can acquire the traffic regulation to be applied to the own vehicle by converting the traffic regulation acquired from the road sign by the image recognition by the converting device dedicated to the combination of (i) the application of the own vehicle and (ii) the specification of the own vehicle.

In the information providing apparatus according to further another aspect of the present invention, the vehicle information may include, as the vehicle information, (i) vehicle application information on an application of the own vehicle and (ii) vehicle specification information on a specification of the own vehicle. The electronic control unit may include converting devices which are prepared for every combination of (i) an application of a vehicle, (ii) a specification of a vehicle, and (iii) a current position of a vehicle and convert the traffic regulation displayed in the road sign to the traffic regulation to be applied to a target vehicle based on a current positions of the target vehicle. The electronic control unit may be configured to select, from the converting devices, the converting device dedicated to a combination of (i) the application of the own vehicle, (ii) the specification of the own vehicle, and (iii) the current position of the own vehicle based on (i) the vehicle application information, (ii) the vehicle specification information, and (iii) the positional information, and acquire the applied traffic regulation by converting the image-recognized traffic regulation by the selected converting device based on the current position of the own vehicle.

The information providing apparatus according to this aspect of the present invention can acquire the traffic regulation to be applied to the own vehicle by converting the traffic regulation acquired from the road sign by the image recognition by the converting device dedicated to (i) the combination of the application of the own vehicle, (ii) the specification of the own vehicle, and (iii) the current position of the own vehicle.

In the information providing apparatus according to further another aspect of the present invention, the electronic control unit may be configured to change the converting device from a first converting device to a second converting device when the own vehicle moves from a first area into a second area different from the first area. The first converting device may be the converting device which converts the image-recognized traffic regulation to the applied traffic regulation for the first area. The second converting device may be the converting device which converts the image-recognized traffic regulation to the applied traffic regulation for the second area.

The information providing apparatus according to this aspect of the present invention can acquire the traffic regulation to be applied to the own vehicle by converting the traffic regulation acquired by the image recognition by the converting device prepared for an area where the own vehicle is travelling.

In the information providing apparatus according to further another aspect of the present invention, the electronic control unit may store maps which are prepared for every attribute of a vehicle and are used to acquire, as the applied traffic regulation, the traffic regulation to be applied to a target vehicle based on (i) the traffic regulation displayed in the road sign and (ii) a current position of the target vehicle. The electronic control unit may be configured to select, from the stored maps, the map dedicated to the attribute of the own vehicle, and acquire the applied traffic regulation by applying (i) the image-recognized traffic regulation and (ii) the positional information on the own vehicle to the selected map.

The information providing apparatus according to this aspect of the present invention can acquire the traffic regulation to be applied to the own vehicle from the map dedicated to the attribute of the own vehicle.

In the information providing apparatus according to further another aspect of the present invention, the electronic control unit may store maps which are prepared for every combination of (i) an attribute of a vehicle and (ii) a current position of a vehicle and are used to acquire, as the applied traffic regulation, the traffic regulation to be applied to a target vehicle based on (i) the traffic regulation displayed in the road sign and (ii) a current position of the target vehicle. The electronic control unit may be configured to select, from the stored maps, the map dedicated to a combination of (i) the attribute of the own vehicle and (ii) the current position of the own vehicle, and acquire the applied traffic regulation by applying (i) the image-recognized traffic regulation and (ii) the current position of the own vehicle to the selected map.

The information providing apparatus according to this aspect of the present invention can acquire the traffic regulation to be applied to the own vehicle from the map dedicated to the combination of the attribute of the own vehicle and the current position of the own vehicle.

According to the present invention, an information providing method is a method for notifying an operator of an own vehicle of an applied traffic regulation which is a traffic regulation to be applied to the own vehicle. The information providing method comprises a step of acquiring an image-recognized traffic regulation by an image recognition of recognizing a captured image of a view ahead of the own vehicle. The image-recognized traffic regulation is the traffic regulation which is displayed in a road sign captured in the captured image and is to be applied to vehicles travelling in a traffic lane where the own vehicle is travelling. The information providing method comprises steps of acquiring positional information on a current position of the own vehicle, acquiring the applied traffic regulation based on (i) the positional information, (ii) the image-recognized traffic regulation, and (iii) vehicle information on an attribute of the own vehicle, and notifying the operator of the own vehicle of the acquired applied traffic regulation.

The information providing method according to the present invention notifies the operator of the own vehicle of the traffic regulation, depending on the attribute of the own vehicle and the current position of the own vehicle. Thus, the information providing method can notify the operator of the own vehicle of the appropriate traffic regulation.

According to the present invention, a computer-readable storage medium stores a vehicle driving assistance program which notifies an operator of an own vehicle of an applied traffic regulation which is a traffic regulation to be applied to the own vehicle. The information providing program is configured to acquire an image-recognized traffic regulation by an image recognition of recognizing a captured image of a view ahead of the own vehicle. The image-recognized traffic regulation is the traffic regulation which is displayed in a road sign captured in the captured image and is to be applied to vehicles travelling in a traffic lane where the own vehicle is travelling. The information providing program is configured to acquire positional information on a current position of the own vehicle, acquire the applied traffic regulation based on (i) the positional information, (ii) the image-recognized traffic regulation, and (iii) vehicle information on an attribute of the own vehicle, and notify the operator of the own vehicle of the acquired applied traffic regulation.

The information providing program stored in the storage medium according to the present invention notifies the operator of the own vehicle of the traffic regulation, depending on the attribute of the own vehicle and the current position of the own vehicle. Thus, the information providing program can notify the operator of the own vehicle of the appropriate traffic regulation.

Elements of the invention are not limited to elements of embodiments and modified examples of the invention described with reference to the drawings. The other objects, features and accompanied advantages of the invention can be easily understood from the embodiments and the modified examples of the invention.

### BRIEF DESCRIPTION OF THE DRAWINGS

FIG. 1 is a view which shows an information providing apparatus according to an embodiment of the present invention.
FIG. 2 is a view which shows a display according to the embodiment of the present invention.
FIG. 3 is a view which shows converting maps according to the embodiment of the present invention.
FIG. 4 is a view which shows a flowchart of a routine executed by the information providing apparatus according to the embodiment of the present invention.
FIG. 5 is a view which shows converting maps according to a second embodiment of the present invention.

### DETAILED DESCRIPTION

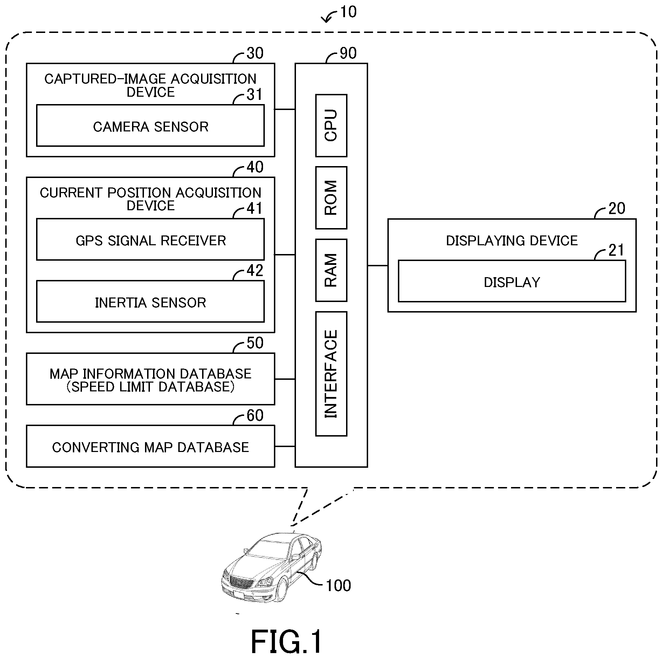

Below, an information providing apparatus, an information providing method, and a storage medium storing an information providing program will be described with reference to the drawings. FIG. 1 shows the information providing apparatus 10 according to the embodiment of the present invention. The information providing apparatus 10 is mounted on an own vehicle 100. Below, the information providing apparatus 10 will be described with an example that an operator of the own vehicle 100 is a driver of the own vehicle 100, that is, a person who is in the own vehicle 100 and drives the own vehicle 100.

In this regard, the operator of the own vehicle 100 may be a remote operator of the own vehicle 100, that is, a person who is not in the own vehicle 100 and remotely drives the own vehicle 100. When the operator of the own vehicle 100 is the remote operator, the information providing apparatuses 10 are mounted on the own vehicle 100 and a remote operation facility installed outside the own vehicle 100 for remotely driving the own vehicle 100, respectively. In this case, functions of the information providing apparatus 10 described below are shared by the information providing apparatus 10 mounted on the own vehicle 100 and the information providing apparatus 10 mounted on the remote operation facility.

As shown in FIG. 1, the information providing apparatus 10 includes an electronic control unit or an ECU 90 as a control device. The ECU 90 includes a microcomputer as a main component. The microcomputer includes a CPU, storage medium including a ROM, a RAM, and a non-volatile memory, and an interface. The CPU is configured or programmed to realize various functions by executing instructions, programs, or routines stored in the storage medium. In particular, in the present embodiment, the information providing apparatus 10 stores, in the storage medium, programs to realize various functions of the information providing apparatus 10.

It should be noted that the information providing apparatus 10 includes only one ECU 90, but may include a plurality of the ECUs and may be configured to realize the functions of the information providing apparatus 10 described below by the ECUs.

In addition, the information providing apparatus 10 may be configured to update the programs stored in the storage medium by external devices with wireless communication such as an Internet communication.

The own vehicle 100 is equipped with a displaying device 20, a captured-image acquisition device 30, a current position acquisition device 40, a map information database 50, and a converting map database 60.

It should be noted that when the own vehicle 100 is a remotely-driven vehicle, the displaying device 20 is mounted on the remote operation facility installed outside the own vehicle 100 for remotely driving the own vehicle 100. In addition, when the own vehicle 100 is the remotely-driven vehicle, the current position acquisition device 40, the map information database 50, and the converting map database 60 are mounted on one of the own vehicle 100 and the remote operation facility, respectively.

### <Displaying Device>

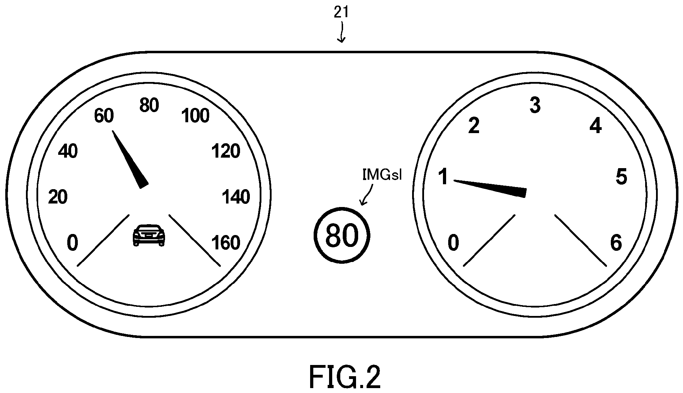

The displaying device 20 is a device which displays various images. The displaying device 20 includes a display 21. The displaying device 20 is electrically connected to the ECU 90. The displaying device 20 displays an image on the display 21 in accordance with a command received from the ECU 90 (i.e., the information providing apparatus 10). For example, as shown in FIG. 2, the displaying device 20 displays a speed limit image IMGsl on the display 21 in accordance with the command received from the information providing apparatus 10. The speed limit image IMGsl is an image which displays a speed limit to be applied to the own vehicle 100.

### <Captured-Image Acquisition Device>

The captured-image acquisition device 30 is a device which captures and acquires images of a view ahead of the own vehicle 100. The captured-image acquisition device 30 includes a camera sensor 31. The captured-image acquisition device 30 is electrically connected to the ECU 90. The captured-image acquisition device 30 sends a camera image IMGcam to the ECU 90. The camera image IMGcam is an image of the view ahead of the own vehicle 100 and which is captured and acquired by the camera sensor 31. The ECU 90 (i.e., the information providing apparatus 10) extracts a road sign displaying the speed limit from the camera image IMGcam received from the captured-image acquisition device 30, and acquires the speed limit displayed in the extracted road sign as an image-recognized speed limit SLimg.

### <Current Position Acquisition Device>

The current position acquisition device 40 is a device which acquires a current position of the own vehicle 100. The current position acquisition device 40 includes a GPS signal receiver 41 and an inertia sensor 42. The GPS signal receiver 41 is a device which receives so-called GPS signals. The inertia sensor 42 is a sensor which detects an acceleration rate of the own vehicle 100, an angular speed of the own vehicle 100, and the like. The current position acquisition device 40 is electrically connected to the ECU 90. The current position acquisition device 40 acquires the current position of the own vehicle 100 based on the GPS signals received by the GPS signal receiver 41 and the acceleration rate of the own vehicle 100, the angular speed of the own vehicle 100, and the like detected by the inertia sensor 42, and sends the acquired current position to the ECU 90. The ECU 90 (i.e., the information providing apparatus 10) acquires the current position received from the current position acquisition device 40 as a current position Pnow of the own vehicle 100. The current position Pnow is positional information IP on the own vehicle 100.

### <Map Information Database>

The map information database 50 is a database which stores map information. The map information database 50 includes a speed limit database, that is, a database which stores the speed limits set for traffic lanes of roads, respectively. The speed limits are memorized in the map information database 50 as a part of the map information, associated with the traffic lanes of the roads. The map information database 50 is electrically connected to the ECU 90. The ECU 90 (i.e., the information providing apparatus 10) checks the current position Pnow of the own vehicle 100 in the map information database 50 and acquires, as a data speed limit SLdata, the speed limit set for the traffic lane where the own vehicle 100 is currently travelling from the map information database 50.

It should be noted that the information providing apparatus 10 is configured to use the map information database 50 installed on the own vehicle 100, but the information providing apparatus 10 may be configured to use the map information database 50 stored in external servers or the like outside the own vehicle 100. In this case, the information providing apparatus 10 is configured to use the map information database 50 stored in the external servers or the like by wirelessly communicating with the external servers or the like.

### <Converting Map Database>

In some countries or areas, the speed limits to be applied to vehicles are different, depending on attributes of the vehicles even when the vehicles travel in the same traffic lane. For example, in Europe, even when the vehicles travel in the same traffic lane, the speed limits to be applied to the vehicles are different, depending on the attribute of the vehicle relating to an application of the vehicle such as whether the vehicle is a passenger transport vehicle for transporting passengers, or a cargo transport vehicle for transporting cargos. Further, when the vehicle is the passenger transport vehicle, the speed limit to be applied to the vehicle varies, depending on the attribute of the vehicle relating to a specification of the vehicle such as a seating capacity of the vehicle and a gross vehicle weight of the vehicle. Further, when the vehicle is the cargo transport vehicle, the speed limit to be applied to the vehicle varies, depending on the attribute of the vehicle relating to the specification of the vehicle such as a maximum gross weight of the vehicle.

In some of these countries or areas, the road sign installed on the road does not display all the speed limits depending on the attribute of the vehicle. Instead, only the road sign displaying one representative speed limit is installed on the road. For example, when the road sign displaying the speed limit of 100 km/h is installed, the speed limit of 100 km/h may be applied to some of the vehicles, but the speed limit smaller than 100 km/h may be applied to the other vehicles. Therefore, in these countries or areas, when the speed limit displayed in the road sign is displayed by the displaying device 20, the driver may be notified of the wrong speed limit.

Further, not all of the speed limits depending on the attribute of the vehicle in some countries or areas may be stored in the map information database 50. In such countries or areas, when the current position of the vehicle is checked in the map information database 50, and the speed limit of 100 km/h set for the traffic lane where the vehicle is currently travelling is acquired from the map information database 50, the speed limit of 100 km/h may be applied to the vehicle, or the speed limit smaller than 100 km/h may be applied to the vehicle. Therefore, in these countries or areas, when the speed limit acquired from the map information database 50 is displayed by the displaying device 20, the driver may be notified of the wrong speed limit.

Therefore, in order to acquire the appropriate speed limit to be applied to the vehicle in the countries or areas where the speed limit to be applied to the vehicle varies, depending on the attribute of the vehicle, the image-recognized speed limit SLimg and SLdata should be converted to the speed limit to be applied to the vehicle, depending on the attribute of the vehicle.

The converting map database 60 stores converting maps MAP which convert the image-recognized speed limit SLimg and the data speed limit SLdata to an applied speed limit SLapp, that is, the speed limit to be applied to the vehicle, depending on the attribute of the vehicle.

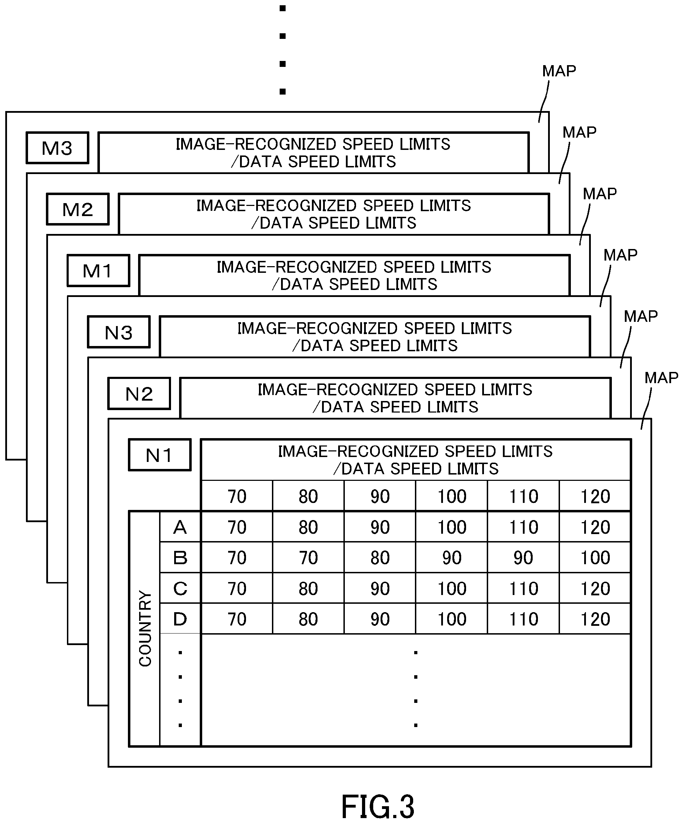

In the present embodiment, as shown in FIG. 3, the converting maps MAP are maps or look-up tables of the applied speed limit SLapp with (i) a current travelling area AREA and (ii) the image-recognized speed limit SLimg and the data speed limit SLdata as arguments. In an example shown in FIG. 3, the current travelling area AREA is a country. Further, the current travelling area AREA is the positional information IP. Furthermore, the current travelling area AREA is an area where the own vehicle 100 is currently travelling. The current travelling area AREA is an area to which the same traffic low is applied. Therefore, the current travelling area AREA may be a country. Further, the applied speed limit SLapp is the speed limit to be applied to the own vehicle 100. It should be noted that the current travelling area AREA of the own vehicle 100 is acquired by checking the current position Pnow of the own vehicle 100 in the map information stored in the map information database 50.

Further, in the present embodiment, the converting maps MAP are prepared for every vehicle category VC. The vehicle category VC is defined by a combination of (i) an application of the vehicle and (ii) a specification of the vehicle. Further, (i) vehicle application information IU (i.e., information on the application of the own vehicle 100), (ii) vehicle specification information IS (i.e., information on the specification of the own vehicle 100,) and (iii) information on the vehicle category VC defined for a combination of (i) an application of a vehicle and (ii) a specification of a vehicle are previously memorized in the information providing apparatus 10 (in particular, the storage medium of the ECU 90). In this regard, only the vehicle category VC dedicated to the combination of (i) the application of the own vehicle 100 and (ii) the specification of the own vehicle 100 may be previously stored in the information providing apparatus 10.

It should be noted that in the example shown in FIG. 3, reference symbol "N1", "N2", and "N3" assigned to the converting maps MAP show the vehicle category VC. The converting map MAP to which the reference symbol "N1" is assigned, is used to acquire the speed limit to be applied to the vehicle of a vehicle category N1 as the vehicle category VC. The converting map MAP to which the reference symbol "N2" is assigned, is used to acquire the speed limit to be applied to the vehicle of a vehicle category N2 as the vehicle category VC. The converting map MAP to which the reference symbol "N3" is assigned, is used to acquire the speed limit to be applied to the vehicle of a vehicle category N3 as the vehicle category VC.

Similarly, in the example shown in FIG. 3, reference symbol "M1", "M2", and "M3" assigned to the converting maps MAP show the vehicle category VC. The converting map MAP to which the reference symbol "M1" is assigned, is used to acquire the speed limit to be applied to the vehicle of a vehicle category M1 as the vehicle category VC. The converting map MAP to which the reference symbol "M2" is assigned, is used to acquire the speed limit to be applied to the vehicle of a vehicle category M2 as the vehicle category VC. The converting map MAP to which the reference symbol "M3" is assigned, is used to acquire the speed limit to be applied to the vehicle of a vehicle category M3 as the vehicle category VC.

It should be noted that when the vehicle is a towing cargo freight vehicle, (i) the vehicle category VC assigned to a tractor of the vehicle towing a trailer of the vehicle and (ii) the vehicle category VC assigned to the tractor of the vehicle not towing the trailer of the vehicle may be different.

The converting map database 60 is electrically connected to the ECU 90. The ECU 90 (i.e., the information providing apparatus 10) selects the converting map MAP dedicated to the vehicle category VC of the own vehicle 100 from the converting map database 60, apply (i) the current travelling area AREA and (ii) one of the image-recognized speed limit SLimg and the data speed limit SLdata to the selected converting map MAP, i.e., the applied converting map MAPapp, and acquire the applied speed limit SLapp. Therefore, the converting maps MAP are maps for converting the image-recognized speed limit SLimg and the data speed limit SLdata to the applied speed limit SLapp.

As described above, depending on the vehicle category VC of the own vehicle 100, the image-recognized speed limit SLimg may be the speed limit SLapp to be applied to the own vehicle 100 as is, or the data limit speed SLdata may be the speed limit SLapp to be applied to the own vehicle 100 as is.

It should be noted that in the present embodiment, the information providing apparatus 10 is configured to use the converting map database 60 installed on the own vehicle 100, but may be configured to use the converting map database 60 stored in external servers or the like outside the own vehicle 100. In this case, the information providing apparatus 10 is configured to use the converting map database 60 stored in the external servers or the like by wirelessly communicating with the external servers or the like.

### <Operations of Information Providing Apparatus>

Next, operations of the information providing apparatus 10 will be described. The information providing apparatus 10 is an apparatus which notifies the driver of the own vehicle 100 of the applied speed limit SLapp which is the speed limit to be applied to the own vehicle 100. The information providing apparatus 10 is configured to acquire, as the image-recognized speed limit SLimg, the speed limit to be applied to the vehicle travelling in the traffic lane where the own vehicle 100 is currently travelling from the road sign included in the camera image IMGcam (i.e. the captured image of the view ahead of the own vehicle 100) by the image recognition, acquire the positional information IP on the own vehicle 100, acquire the applied speed limit SLapp based on (i) the image-recognized speed limit SLimg, (ii) the vehicle information IV on the attribute of the own vehicle 100, and (iii) the positional information IP on the own vehicle 100, and notify the driver of the own vehicle 100 of the acquired applied speed limit SLapp.

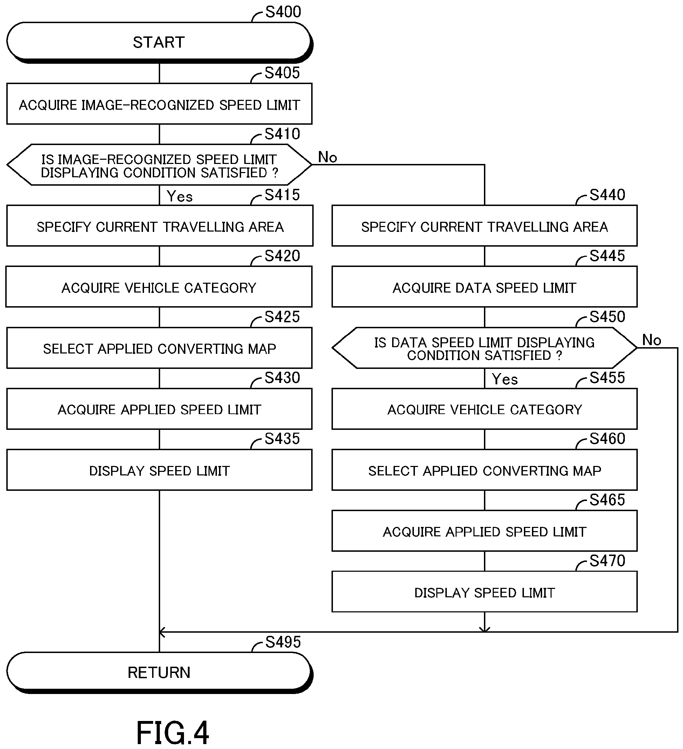

In particular, the information providing apparatus 10 according to a first embodiment of the present invention is configured to execute a routine shown in FIG. 4 with a predetermined calculation cycle and notify the driver of the own vehicle 100 of the applied speed limit SLapp (i.e., the speed limit to be applied to the own vehicle 100) by displaying the applied speed limit SLapp on the display 21 by the displaying device 20.

Therefore, at a predetermined point of time, the information providing apparatus 10 starts a process from a step S400 of the routine shown in FIG. 4 and proceeds with the process to a step S405 to extract an image of the road sign displaying the speed limit from the camera image IMGcam and acquire, as the image-recognized speed limit SLimg, the speed limit displayed in the road sign.

Next, the information providing apparatus 10 proceeds with the process to a step S410 to determine whether an image-recognized speed limit displaying condition C1 is satisfied. The image-recognized speed limit displaying condition C1 is a condition that the image-recognized speed limit SLimg is acquired at the step S405.

When the information providing apparatus 10 determines "Yes" at the step S410, the information providing apparatus 10 proceeds with the process to a step S415 to specify the area where the own vehicle 100 is currently travelling as the current travelling area AREA by checking the current position Pnow of the own vehicle 100 in the map information stored in the map information database 50.

Next, the information providing apparatus 10 proceeds with the process to a step S420 to acquire the vehicle category VC of the own vehicle 100 based on (i) the application of the own vehicle 100 and (ii) the specification of the own vehicle 100.

Next, the information providing apparatus 10 proceeds with the process to a step S425 to select, as the applied converting map MAPapp, the converting map MAP dedicated to the vehicle category VC acquired at the step S420 from the converting map database 60.

Next, the information providing apparatus 10 proceeds with the process to a step S430 to acquire, as the applied speed limit SLapp, the speed limit SL to be applied to the own vehicle 100 by applying (i) the image-recognized speed limit SLimg acquired at the step S405 and (ii) the current travelling area AREA specified at the step S415 to the applied converting map MAPapp selected at the step S425.

That is, the information providing apparatus 10 includes at least one converting device (i.e., the converting map MAP) which converts the image-recognized speed limit SLimg to the applied speed limit SLapp based on (i) the vehicle information IV and (ii) the positional information IP which is information on the current position Pnow of the own vehicle 100 and in the present embodiment, information on the current travelling area AREA. In addition, the information providing apparatus 10 is configured to acquire the applied speed limit SLapp by converting the image-recognized speed limit SLimg by the at least one device (i.e., the converting map MAP) based on (i) the vehicle information IV and (ii) the positional information IP.

In other words, in the present embodiment, the vehicle information IV includes, as the information on the attribute of the own vehicle 100, (i) the vehicle application information IU and (ii) the vehicle specification information IS. Further, the information providing apparatus 10 includes converting devices (i.e., the converting maps MAP) which are prepared for every combination of (i) an application of a vehicle and (ii) a specification of a vehicle and convert the speed limit displayed in the road sign to the speed limit to be applied to a target vehicle based on a current position of the target vehicle. Furthermore, the information providing apparatus 10 is configured to select, from the converting devices (i.e., the converting maps MAP), the converting device dedicated to a combination of (i) the application of the own vehicle 100 and (ii) the specification of the own vehicle 100 (i.e., the applied converting map MAPapp) based on (i) the vehicle application information IU and (ii) the vehicle specification information IS, and acquire the applied speed limit SLapp by converting the image-recognized speed limit SLimg by the selected converting device (i.e., the applied converting map MAPapp) based on the positional information IP on the own vehicle 100.

Further, in other words, the information providing apparatus 10 stores maps (i.e., the converting maps MAP) which are prepared for every attribute of a vehicle and are used to acquire, as the applied speed limit SLapp, the speed limit to be applied to a target vehicle based on (i) the speed limit displayed in the road sign and (ii) a current position of the target vehicle. In addition, the information providing apparatus 10 is configured to select, from the stored maps (i.e., the converting maps MAP), the map dedicated to the attribute of the own vehicle 100 (i.e., the applied converting map MAPapp), and acquire the applied speed limit SLapp from the selected map (i.e., the applied converting map MAPapp) based on (i) the image-recognized speed limit SLimg and (ii) the positional information IP on the own vehicle 100.

Next, the information providing apparatus 10 proceeds with the process to a step S435 to display the applied speed limit SLapp acquired at the step S430 as the speed limit to be applied to the own vehicle 100 on the display 21 by the displaying device 20.

Next, the information providing apparatus 10 proceeds with the process to a step S495 to terminate executing this routine once.

It should be noted that the converting maps MAP of the present embodiment are maps which are prepared for every vehicle category VC and provide the applied speed limit SLapp with (i) the current travelling area AREA and (ii) the image-recognized speed limit SLimg as arguments, but the converting maps MAP may be maps which are prepared for every current travelling area AREA and provide the applied speed limit SLapp with (i) the image-recognized speed limit SLimg and (ii) the vehicle category VC as arguments.

That is, the information providing apparatus 10 may be configured to change the converting device (i.e., the converting map MAP) used to convert the image-recognized speed limit SLimg to the applied speed limit SLapp from a first converting device (or the converting device (i.e., the converting map MAP) which converts the image-recognized speed limit SLimg to the applied speed limit SLapp for an area or a first area) to a second converting device (or the converting device (i.e., the converting map MAP) which converts the image-recognized speed limit SLimg to the applied speed limit SLapp for another area or a second area different from the first area) when the own vehicle 100 moves from the first area into the second area.

Alternatively, the converting maps MAP may be maps which are prepared for every image-recognized speed limit SLimg and provide the applied speed limit SLapp with (i) the current travelling area AREA and (ii) the vehicle category VC as arguments.

That is, the information providing apparatus 10 may be configured to change the converting device (i.e., the converting map MAP) used to convert the image-recognized speed limit SLimg to the applied speed limit SLapp from the converting device (i.e., the converting map MAP) which converts the image-recognized speed limit SLimg corresponding to a speed or a first speed to the applied speed limit SLapp to the converting device (i.e., the converting map MAP) which converts the image-recognized speed limit SLimg corresponding to another speed or a second speed different from the first speed when the image-recognized speed limit SLimg changes from the first speed to the second speed.

As can be understood, in the present invention, the information providing apparatus 10 at least needs to be configured to acquire the applied speed limit SLapp based on (i) the vehicle category VC, (ii) the current travelling area AREA, and (iii) the image-recognized speed limit SLimg.

Further, the information providing apparatus 10 according to the present embodiment is configured to acquire the vehicle category VC of the own vehicle 100 based on (i) the application of the own vehicle 100 and (ii) the specification of the own vehicle 100 and select, as the applied converting map MAPapp, the converting map MAP dedicated to the acquired vehicle category VC, but the own vehicle 100 may be configured to select the applied converting map MAPapp as described below.

That is, the information providing apparatus 10 may be configured to acquire the vehicle category VC of the own vehicle 100 based on any of (i) the application of the own vehicle 100 and (ii) the specification of the own vehicle 100 and select, as the applied converting map MAPapp, the converting map MAP dedicated to the acquired vehicle category VC.

Further, the information providing apparatus 10 according to the present embodiment is configured to acquire the applied speed limit SLapp based on (i) the attribute of the own vehicle 100 defined by the application of the own vehicle 100 and the specification of the own vehicle 100, (ii) the current travelling area AREA, and (iii) the image-recognized speed limit SLimg, but the information providing apparatus 10 may be configured to acquire the applied speed limit SLapp based on (i) the attribute of the own vehicle 100 and (ii) the image-recognized speed limit SLimg without considering the current travelling area AREA when the current travelling area AREA does not need to be considered for acquiring the applied speed limit SLapp.

Further, the information providing apparatus 10 is configured not to notify the driver of the applied speed limit SLapp when the road sign acquired from the captured image (i.e., the camera image IMGcam) by the image recognition does not target the own vehicle 100 even when the information providing apparatus 10 acquires the applied speed limit SLapp based on the image-recognized speed limit SLimg acquired from the road sign .

On the other hand, when the information providing apparatus 10 determines "No" at the step S410, the information providing apparatus 10 proceeds with the process to a step S440 to specify, as the current travelling area AREA, the area where the own vehicle 100 is currently travelling by checking the current position Pnow of the own vehicle 100 in the map information of the map information database 50.

Next, the information providing apparatus 10 proceeds with the process to a step S445 to acquire, as the data speed limit SLdata, the speed limit SL set for the vehicles travelling in the traffic lane where the own vehicle 100 is currently travelling from the map information database 50 by checking the current position Pnow of the own vehicle 100 in the map information of the map information database 50.

Next, the information providing apparatus 10 proceeds with the process to a step S450 to determine whether a data speed limit displaying condition C2 is satisfied.

The data speed limit displaying condition C2 is a condition that the current travelling area AREA specified at the step S440 while the routine shown in FIG. 4 is executed this time, is different from the current travelling area AREA specified at the step S440 or the step S415 while the routine shown in FIG. 4 was executed last time, or a value of the data speed limit SLdata acquired at the step S445 while the routine shown in FIG. 4 is executed this time, is different from (i) a value of the data speed limit SLdata acquired at the step S445 while the routine shown in FIG. 4 was executed last time or (ii) a value of the image-recognized speed limit SLimg acquired most recently at the step S405 and satisfying a predetermined condition C3.

It should be noted that the predetermined condition C3 is a condition that the own vehicle 100 has travelled a predetermined distance D1 or less since the image-recognized speed limit SLimg is acquired most recently at the step S405.

Therefore, the information providing apparatus 10 according to the present embodiment is configured to display the applied speed limit SLapp acquired based on the image-recognized speed limit SLimg on the display 21 by the displaying device 20 when the value of the most-recently-acquired image-recognized speed limit SLimg satisfying the predetermined condition C3 and the value of the data speed limit SLdata are different.

When the information providing apparatus 10 determines "Yes" at the step S450, the information providing apparatus 10 proceeds with the process to a step S455 to acquire the vehicle category VC of the own vehicle 100 based on (i) the application of the own vehicle 100 and (ii) the specification of the own vehicle 100.

Next, the information providing apparatus 10 proceeds with the process to a step S460 to select, as the applied converting map MAPapp, the converting map MAP dedicated to the vehicle category VC acquired at the step S455 from the converting map database 60.

Next, the information providing apparatus 10 proceeds with the process to a step S465 to acquire, as the applied speed limit SLapp, the speed limit SL to be applied to the own vehicle 100 by applying (i) the data speed limit SLdata acquired at the step S445 and (ii) the current travelling area AREA specified at the step S440 to the applied converting map MAPapp selected at the step S460.

That is, the information providing apparatus 10 includes at least one converting device (i.e., the converting maps MAP) which converts the data speed limit SLdata to the applied speed limit SLapp based on (i) the vehicle information IV and (ii) the positional information IP. In addition, the information providing apparatus 10 is configured to acquire the applied speed limit SLapp by converting the data speed limit SLdata by the at least one converting device (i.e., the converting map MAP) based on (i) the vehicle information IV and (ii) the positional information IP.

In other words, in the present embodiment, the vehicle information IV includes, as the information on the attribute of the own vehicle 100, (i) the vehicle application information IU and (ii) the vehicle specification information IS. Further, the information providing apparatus 10 includes converting devices (i.e., the converting maps MAP) which are prepared for every combination of (i) an application of a vehicle and (ii) a specification of a vehicle and convert the data speed limit SLdata to the speed limit to be applied to a target vehicle based on a current position of the target vehicle. Furthermore, the information providing apparatus 10 is configured to select, from the converting devices (i.e., the converting maps MAP), the converting device dedicated to a combination of (i) the application of the own vehicle 100 and (ii) the specification of the own vehicle 100 (i.e., the applied converting map MAPapp) based on (i) the vehicle application information IU and (ii) the vehicle specification information IS, and acquire the applied speed limit SLapp by converting the data speed limit SLdata by the selected converting device (i.e., the applied converting map MAPapp) based on the positional information IP on the own vehicle 100.

Further, in other words, the information providing apparatus 10 stores maps (i.e., the converting maps MAP) which are prepared for every attribute of a vehicle and are used to acquire, as the applied speed limit SLapp, the speed limit to be applied to a target vehicle based on (i) the data speed limit SLdata and (ii) a current position of the target vehicle. In addition, the information providing apparatus 10 is configured to select, from the stored maps (i.e. the converting maps MAP), the map dedicated to the attribute of the own vehicle 100 (i.e., the applied converting map MAPapp), and acquire the applied speed limit SLapp from the selected map (i.e., the applied converting map MAPapp) based on (i) the data speed limit SLdata and (ii) the positional information IP on the own vehicle 100.

Next, the information providing apparatus 10 proceeds with the process to a step S470 to display the applied speed limit SLapp acquired at the step S465 as the speed limit to be applied to the own vehicle 100 on the display 21 by the displaying device 20.

Next, the information providing apparatus 10 proceeds with the process to the step S495 to terminate executing this routine once.

As can be understood, the information providing apparatus 10 is configured to acquire the positional information IP on the own vehicle 100, specify the traffic lane where the own vehicle 100 is currently travelling based on the acquired positional information IP, acquire, as the data speed limit SLdata, the speed limit to be applied to a vehicle travelling in the specified traffic lane from the map information database 50, acquire, as the applied speed limit SLapp, the speed limit to be applied to the own vehicle 100 based on (i) the acquired data speed limit SLdata, (ii) the vehicle information IV on the attribute of the own vehicle 100, and (iii) the positional information IP, and notify the driver of the own vehicle 100 of the acquired applied speed limit SLapp.

It should be noted that the converting maps MAP of the present embodiment are maps which are prepared for every vehicle category VC and provide the applied speed limit SLapp with (i) the current travelling area AREA and (ii) the data speed limit SLdata as arguments, but the converting maps MAP may be maps which are prepared for every current travelling area AREA and provide the applied speed limit SLapp with (i) the data speed limit SLdata and (ii) the vehicle category VC as arguments.

That is, the information providing apparatus 10 may be configured to change the converting device (i.e., the converting map MAP) used to convert the data speed limit SLdata to the applied speed limit SLapp from a first converting device (or the converting device (i.e. the converting map MAP) which converts the data speed limit SLdata to the applied speed limit SLapp for an area or a first area) to a second converting device (or the converting device (i.e. the converting map MAP) which converts the data speed limit SLdata to the applied speed limit SLapp for another area or a second area different from the first area) when the own vehicle 100 moves from the first area into the second area.

Alternatively, the converting maps MAP may be maps which are prepared for every data speed limit SLdata and are provide the applied speed limit SLapp with (i) the current travelling area AREA and (ii) the vehicle category VC as arguments.

That is, the information providing apparatus 10 may be configured to change the converting device (i.e., the converting map MAP) used to convert the data speed limit SLdata to the applied speed limit SLapp from the converting device (i.e., the converting map MAP) which converts the data speed limit SLdata corresponding to a speed or a first speed to the applied speed limit SLapp to the converting device (i.e., the converting map MAP) which converts the data speed limit SLdata corresponding to another speed or a second speed different from the first speed to the applied speed limit SLapp when the data speed limit SLdata changes from the first speed to the second speed.

As can be understood, in the present invention, the information providing apparatus 10 at least needs to be configured to acquire the applied speed limit SLapp based on (i) the vehicle category VC, (ii) the current travelling area AREA, and (iii) the data speed limit SLdata.

Further, the information providing apparatus 10 is configured not to notify the driver of the applied speed limit SLapp when the data speed limit SLdata acquired from the map information database 50 does not target the own vehicle 100 even when the information providing apparatus 10 acquires the applied speed limit SLapp based on the data speed limit SLdata.

The operations of the information providing apparatus 10 have been described.

As described above, in some countries or areas, the different speed limits are applied to vehicles, depending on the attributes of the vehicles even when the vehicles travel in the same traffic lane. In these countries or areas, the road sign installed on a road may not display all the speed limits to be applied to the vehicles. In these countries or areas, the road sign installed on the road may display only one representative speed limit. Therefore, in such countries or areas, when the speed limit displayed in the road sign acquired by the image recognition is notified to the operator of the vehicle, the operator of the vehicle may be notified of the speed limit not to be applied to the vehicle.

The information providing apparatus 10 notifies the driver of the speed limit, depending on (i) the attribute of the own vehicle 100 and (ii) the current position Pnow of the own vehicle 100. Thus, the information providing apparatus 10 can notify the driver of the appropriate speed limit.

It should be noted that the present invention is not limited to the aforementioned embodiments, and various modifications can be employed within the scope of the invention.

For example, in some areas, vehicles to which the same vehicle category VC is assigned based on (i) the above-mentioned application of a vehicle and (ii) the above-mentioned specification of a vehicle, may be assigned different vehicle categories VC depending on an application of a vehicle other than the above-mentioned application of the vehicle.

In particular, in some areas, vehicles to which the same vehicle category VC is assigned based on the above-mentioned application and specification of the vehicle, may be assigned different vehicle categories VC depending on the attribute of the vehicle relating to the application of the vehicle such as whether the vehicle is an off-road vehicle.

Next, the operations of the information providing apparatus 10 according to a second embodiment of the present invention for this case will be described.

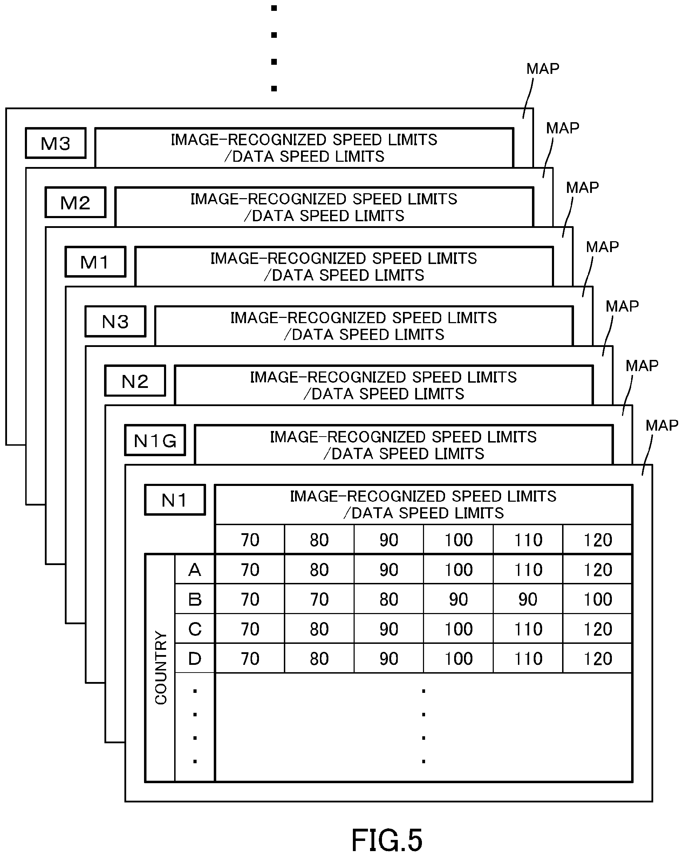

As shown in FIG. 5, also in the second embodiment, the converting maps MAP are prepared for every vehicle category VC, but the vehicle categories VC of the second embodiment are defined by (i) a first vehicle application, (ii) a second vehicle application, and (iii) the specification of the vehicle. The first vehicle application is an application of a vehicle such as whether the vehicle is the passenger transport vehicle or the cargo transport vehicle. The second vehicle application is an application of a vehicle such as whether the vehicle is an off-road vehicle (for example, a pick-up truck) or not.

(i) Information on the first vehicle application of the own vehicle 100, (ii) information on the second vehicle application of the own vehicle 100, (iii) information on the specification of the own vehicle 100, and (iv) information on the vehicle categories VC defined by combinations of the first vehicle application and the second vehicle application, are previously stored in the own vehicle 100 (in particular, the storage medium of the ECU 90).

It should be noted that FIG. 5 is similar to FIG. 3, but a converting map MAP assigned a reference symbol "N1G" is added to FIG. 5. The converting map MAP assigned the reference symbol "N1G" is used to acquire the speed limit to be applied to a vehicle having the vehicle category VC of "N1G."

Similar to the information providing apparatus 10 according to the first embodiment, the information providing apparatus 10 according to the second embodiment is an apparatus which notifies the driver of the own vehicle 100 of the applied speed limit SLapp which is the speed limit to be applied to the own vehicle 100. The information providing apparatus 10 according to the second embodiment is configured to acquire, as the image-recognized speed limit SLimg, the speed limit to be applied to the vehicle travelling in the traffic lane where the own vehicle 100 is currently travelling from the road sign included in the camera image IMGcam (i.e. the captured image of the view ahead of the own vehicle 100) by the image recognition, acquire the positional information IP on the own vehicle 100, acquire the applied speed limit SLapp based on (i) the image-recognized speed limit SLimg, (ii) the vehicle information IV on the attribute of the own vehicle 100, and (iii) the positional information IP, and notify the driver of the own vehicle 100 of the acquired applied speed limit SLapp.

In particular, similar to the information providing apparatus 10 according to the first embodiment, the information providing apparatus 10 according to the second embodiment is configured to execute the routine shown in FIG. 4 with the predetermined calculation cycle and notify the driver of the own vehicle 100 of the applied speed limit SLapp (i.e., the speed limit to be applied to the own vehicle 100) by displaying the applied speed limit SLapp on the display 21 by the displaying device 20.

However, unlike the information providing apparatus 10 according to the first embodiment, the information providing apparatus 10 according to the second embodiment acquires the vehicle category VC of the own vehicle 100 based on (i) the first vehicle application of the own vehicle 100, (ii) the second vehicle application of the own vehicle 100, (iii) the specification of the own vehicle 100, and (iv) the current travelling area AREA specified at the step S415 when the information providing apparatus 10 proceeds with the process to the step S420.

Then, similar to the information providing apparatus 10 according to the first embodiment, the information providing apparatus 10 according to the second embodiment proceeds with the process to the step S425 to select, as the applied converting map MAPapp, the converting map MAP dedicated to the vehicle category VC acquired at the step S420 from the converting map database 60.

Then, similar to the information providing apparatus 10 according to the first embodiment, the information providing apparatus 10 according to the second embodiment proceeds with the process to the step S430 to acquire, as the applied speed limit SLapp, the speed limit SL to be applied to the own vehicle 100 by applying (i) the image-recognized speed limit SLimg acquired at the step S405 and (ii) the current travelling area AREA specified at the step S415 to the applied converting map MAPapp selected at the step S425.

That is, similar to the information providing apparatus 10 according to the first embodiment, the information providing apparatus 10 according to the second embodiment includes at least one converting device (i.e., the converting maps MAP) which converts the image-recognized speed limit SLimg to the applied speed limit SLapp based on (i) the vehicle information IV and (ii) the positional information IP. In addition, the information providing apparatus 10 is configured to acquire the applied speed limit SLapp by converting the image-recognized speed limit SLimg by the at least one device (i.e., the converting map MAP) based on (i) the vehicle information IV and (ii) the positional information IP.

In other words, in the present embodiment, the vehicle information IV includes, as information on the attribute of the own vehicle 100, (i) the vehicle application information IU and (ii) the vehicle specification information IS. Further, similar to the information providing apparatus 10 according to the first embodiment, the information providing apparatus 10 according to the second embodiment includes converting devices (i.e., the converting maps MAP) which are prepared for every combination of (i) an application of a vehicle and (ii) a specification of a vehicle and convert the speed limit displayed in the road sign to the speed limit to be applied to a target vehicle based on a current position of the target vehicle. Furthermore, the information providing apparatus 10 is configured to select, from the converting devices (i.e., the converting maps MAP), the converting device dedicated to a combination of (ii) the application of the own vehicle 100 and (ii) the specification of the own vehicle 100 (i.e., the applied converting map MAPapp) based on (i) the vehicle application information IU and (ii) the vehicle specification information IS, and acquire the applied speed limit SLapp by converting the image-recognized speed limit SLimg by the selected converting device (i.e., the applied converting map MAPapp) based on the positional information IP on the own vehicle 100.

Further, in other words, similar to the information providing apparatus 10 according to the first embodiment, the information providing apparatus 10 according to the second embodiment stores maps (i.e., the converting maps MAP) which are prepared for every attribute of a vehicle and are used to acquire, as the applied speed limit SLapp, the speed limit to be applied to a target vehicle based on (i) the speed limit displayed in the road sign and (ii) a current position of the target vehicle. In addition, the information providing apparatus 10 is configured to select, from the stored maps (i.e., the converting maps MAP), the map dedicated to the attribute of the own vehicle 100 (i.e., the applied converting map MAPapp), and acquire the applied speed limit SLapp from the selected map (i.e., the applied converting map MAPapp) based on (i) the image-recognized speed limit SLimg and (ii) the positional information IP on the own vehicle 100.

Further, in the present embodiment, the vehicle information IV includes, as the information on the attribute of the own vehicle 100, (i) the vehicle information IV (i.e., the information on the application of the own vehicle 100, in particular, information IU1 on the first vehicle application and information IU2 on the second vehicle application) and (ii) the vehicle specification information IS. Further, unlike the information providing apparatus 10 according to the first embodiment, the information providing apparatus 10 according to the second embodiment includes converting devices (i.e., the converting maps MAP) which are prepared for every combination of (i) an application of a vehicle, (ii) a specification of a vehicle, and (iii) a current position of a vehicle and convert the speed limit displayed in the road sign to the speed limit to be applied to a target vehicle based on a current position of the target vehicle. Furthermore, the information providing apparatus 10 is configured to select, from the converting devices (i.e., the converting maps MAP), the converting device dedicated to a combination of (i) the application of the own vehicle 100, (ii) the specification of the own vehicle 100, and (iii) the current position Pnow of the own vehicle 100 (i.e., the applied converting map MAPapp) based on (i) the vehicle application information IU, (ii) the vehicle specification information IS, and (iii) the positional information IP on the own vehicle 100, and acquire the applied speed limit SLapp by converting the image-recognized speed limit SLimg by the selected converting device (i.e., the applied converting map MAPapp) based on the positional information IP.

Further, in other words, unlike the information providing apparatus 10 according to the first embodiment, the information providing apparatus 10 according to the second embodiment stores maps (i.e., the converting maps MAP) which are prepared for every combination of (i) an attribute of a vehicle and (ii) a current position of a vehicle and are used to acquire, as the applied speed limit SLapp, the speed limit to be applied to a target vehicle based on (i) the speed limit displayed in the road sign and (ii) a current position of the target vehicle. In addition, the information providing apparatus 10 is configured to select, from the stored maps (i.e., the converting maps MAP), the map dedicated to a combination of (i) the attribute of the own vehicle 100 and (ii) the current position Pnow of the own vehicle 100 (i.e., the applied converting map MAPapp), and acquire the applied speed limit SLapp from the selected map (i.e., the applied converting map MAPapp) based on (i) the image-recognized speed limit SLimg and (ii) the positional information IP on the own vehicle 100.

Then, similar to the information providing apparatus 10 according to the first embodiment, the information providing apparatus 10 according to the second embodiment proceeds with the process to the step S435 to display the applied speed limit SLapp acquired at the step S430 as the speed limit to be applied to the own vehicle 100 on the display 21 by the displaying device 20.

Further, unlike the information providing apparatus 10 according to the first embodiment, when the information providing apparatus 10 according to the second embodiment proceeds with the process to the step S455 to acquire the vehicle category VC of the own vehicle 100 based on (i) the first vehicle application of the own vehicle 100, (ii) the second vehicle application of the own vehicle 100, (iii) the specification of the own vehicle 100, and (iv) the current travelling area AREA specified at the step S440.

Then, similar to the information providing apparatus 10 according to the first embodiment, the information providing apparatus 10 according to the second embodiment proceeds with the process to the step S460 to select, as the applied converting map MAPapp, the converting map MAP dedicated to the vehicle category VC acquired at the step S455 from the converting map database 60.

Next, similar to the information providing apparatus 10 according to the first embodiment, the information providing apparatus 10 according to the second embodiment proceeds with the process to the step S465 to acquire, as the applied speed limit SLapp, the speed limit SL to be applied to the own vehicle 100 by applying (i) the data speed limit SLdata acquired at the step S445 and (ii) the current travelling area AREA specified at the step S440 to the applied converting map MAPapp selected at the step S460.

That is, similar to the information providing apparatus 10 according to the first embodiment, the information providing apparatus 10 according to the second embodiment includes at least one converting device (i.e., the converting map MAP) which converts the data speed limit SLdata to the applied speed limit SLapp based on (i) the vehicle information IV and (ii) the positional information IP. In addition, the information providing apparatus 10 is configured to acquire the applied speed limit SLapp by converting the data speed limit SLdata by the at least one converting device (i.e., the converting map MAP) based on (i) the vehicle information IV and (ii) the positional information IP.

In other words, in the present embodiment, the vehicle information IV includes, as the information on the attribute of the own vehicle 100, (i) the vehicle application information IU and (ii) the vehicle specification information IS. Further, similar to the information providing apparatus 10 according to the first embodiment, the information providing apparatus 10 according to the second embodiment includes converting devices (i.e., the converting maps MAP) which are prepared for every combination of (i) an application of a vehicle and (ii) a specification of a vehicle and convert the data speed limit SLdata to the speed limit to be applied to a target vehicle based on a current position of the target vehicle. Furthermore, the information providing apparatus 10 is configured to select, from the converting devices (i.e., the converting maps MAP), the converting device dedicated to a combination of (i) the application of the own vehicle 100 and (ii) the specification of the own vehicle 100 (i.e., the applied converting map MAPapp) based on (i) the vehicle application information IU and (ii) the vehicle specification information IS, and acquire the applied speed limit SLapp by converting the data speed limit SLdata by the selected converting device (i.e., the applied converting map MAPapp) based on the positional information IP on the own vehicle 100.

Further, in other words, similar to the information providing apparatus 10 according to the first embodiment, the information providing apparatus 10 according to the second embodiment stores maps (i.e., the converting maps MAP) which are prepared for every attribute of a vehicle and are used to acquire, as the applied speed limit SLapp, the speed limit to be applied to a target vehicle based on (i) the data speed limit SLdata and (i) a current position of the target vehicle. In addition, the information providing apparatus 10 is configured to select, from the stored maps (i.e. the converting maps MAP), the map dedicated to the attribute of the own vehicle 100 (i.e., the applied converting map MAPapp), and acquire the applied speed limit SLapp from the selected map (i.e., the applied converting map MAPapp) based on (i) the data speed limit SLdata and (ii) the positional information IP on the own vehicle 100.

Further, in the present embodiment, the vehicle information IV includes, as the information on the attribute of the own vehicle 100, (i) the vehicle information IV (i.e., the information on the application of the own vehicle 100, in particular, the information IU1 on the first vehicle application and the information IU2 on the second vehicle application) and (ii) the vehicle specification information IS. Further, unlike the information providing apparatus 10 according to the first embodiment, the information providing apparatus 10 according to the second embodiment includes converting devices (i.e., the converting maps MAP) which are prepared for every combination of (i) an application of a vehicle, (ii) a specification of a vehicle, and (iii) a current position of a vehicle and convert the data speed limit SLdata to the speed limit to be applied to a target vehicle based on a current position of the target vehicle. Furthermore, the information providing apparatus 10 is configured to select, from the converting devices (i.e., the converting maps MAP), the converting device dedicated to a combination of (i) the application of the own vehicle 100, (ii) the specification of the own vehicle 100, and (iii) the current position Pnow of the own vehicle 100 (i.e., the applied converting map MAPapp) based on (i) the vehicle application information IU, (ii) the vehicle specification information IS, and (iii) the positional information IP on the own vehicle 100, and acquire the applied speed limit SLapp by converting the data speed limit SLdata by the selected converting device (i.e., the applied converting map MAPapp) based on the positional information IP.

Further, in other words, unlike the information providing apparatus 10 according to the first embodiment, the information providing apparatus 10 according to the second embodiment stores maps (i.e., the converting maps MAP) which are prepared for every combination of (i) an attribute of a vehicle and (ii) a current position of a vehicle and are used to acquire, as the applied speed limit SLapp, the speed limit to be applied to a target vehicle based on (i) the data speed limit SLdata and (ii) a current position of the target vehicle. In addition, the information providing apparatus 10 is configured to select, from the stored maps (i.e., the converting maps MAP), the map dedicated to a combination of (i) the attribute of the own vehicle 100 and (ii) the current position Pnow of the own vehicle 100 (i.e., the applied converting map MAPapp), and acquire the applied speed limit SLapp from the selected map (i.e., the applied converting map MAPapp) based on (i) the data speed limit SLdata and (ii) the positional information IP on the own vehicle 100.

Then, similar to the information providing apparatus 10 according to the first embodiment, the information providing apparatus 10 according to the second embodiment proceeds with the process to the step S470 to display the applied speed limit SLapp acquired at the step S465 as the speed limit to be applied to the own vehicle 100 on the display 21 by the displaying device 20.

As can be understood, the information providing apparatus 10 according to the second embodiment is configured to acquire the positional information IP on the own vehicle 100, specify the traffic lane where the own vehicle 100 is currently travelling based on the acquired positional information IP, acquire, as the data speed limit SLdata, the speed limit to be applied to a vehicle travelling in the specified traffic lane from the map information database 50, acquire, as the applied speed limit SLapp, the speed limit to be applied to the own vehicle 100 based on (i) the acquired data speed limit SLdata, (ii) the vehicle information IV on the attribute of the own vehicle 100, and (iii) the positional information IP on the own vehicle 100, and notify the driver of the own vehicle 100 of the acquired applied speed limit SLapp.

The operations of the information providing apparatus 10 according to the second embodiment have been described. Similar to the information providing apparatus 10 according to the first embodiment, the information providing apparatus 10 according to the second embodiment notifies the driver of the speed limit, depending on the vehicle category VC of the own vehicle 100 relating to the attribute of the own vehicle 100. Thus, the information providing apparatus 10 can notify the driver of the appropriate speed limit.

It should be noted that in a situation where a vehicle identification number associating with the vehicle category VC or data for specifying the vehicle category VC is previously memorized in the information providing apparatus 10 (in particular, the storage medium of the ECU 90), the information providing apparatus 10 may be configured to acquire the vehicle category VC of the own vehicle 100 based on the vehicle identification number and acquire the applied speed limit SLapp, using the acquired vehicle category VC. It should be noted that in general, the vehicle identification number is a number assigned to a vehicle for specifying the vehicle.

Further, an area specifying ECU or an ECU for specifying the current travelling area AREA based on the current position Pnow of the own vehicle 100 may be installed on the own vehicle 100, and the information providing apparatus 10 may be configured such that the ECU 90 receives data on the current travelling area AREA from the area specifying ECU. In this case, the area specifying ECU may be configured to send the data on the current travelling area AREA to the ECU 90 when the current travelling area AREA changes. In this case, when the data on the current travelling area AREA is not sent to the information providing apparatus 10 from the area specifying ECU, the information providing apparatus 10 acquires the applied speed limit SLapp, using the current travelling area AREA acquired based on the data on the current travelling area AREA sent from the area specifying ECU last time. Thereby, a calculation load of the ECU 90 can be reduced.

Further, in the embodiments described above, the speed limit is one of traffic regulations to be applied to the own vehicle 100, and the present invention can be applied to the information providing apparatus 10 which notifies the driver of the traffic regulations other than the speed limit by displaying the regulations on the display 21 by the displaying device 20. In this case, the information providing apparatus 10 is configured to acquire, as an image-recognized traffic regulation, a traffic regulation to be applied to a vehicle travelling in a traffic lane where the own vehicle 100 is currently travelling by the image recognition from a road sign included in a captured image (in the embodiments described above, the camera image IMGcam) acquired by capturing a view ahead of the own vehicle 100, acquire the positional information IP on the own vehicle 100, acquire, as an applied traffic regulation, the traffic regulation to be applied to the own vehicle 100 based on (i) the image-recognized traffic regulation, (ii) the vehicle information IV on the attribute of the own vehicle 100, and (iii) the positional information IP on the own vehicle 100, and notify the driver of the own vehicle 100 of the acquired applied traffic regulation.

Further, the present invention can be applied to a scene that a speed limiting system or an adaptive auto-cruise control system sets a set vehicle travelling speed. That is, the speed limiting system is a system of (i) automatically limiting a travelling speed of the own vehicle 100 to a speed equal to or smaller than the set vehicle travelling speed and (ii) setting the speed limit as the set vehicle travelling speed, and the present invention can be applied to a scene that the speed limiting system acquire the speed limit to be set as the set vehicle travelling speed. Further, the adaptive auto-cruise control system is a so-called following travelling control or a system of (i) autonomously moving the own vehicle 100 so as to follow a preceding vehicle, limiting the travelling speed of the own vehicle 100 to a speed equal to or smaller than the set vehicle travelling speed and (ii) setting the speed limit as the set vehicle travelling speed, and the present invention can be applied to a scene that the adaptive auto-cruise control system acquire the speed limit to be set as the set vehicle travelling speed.

Further, the present invention can be applied to a driving assistance system of assisting the driver to comply with the traffic regulations of the road traffic law in the countries or the areas. For example, when the road sign has an auxiliary sign with a truck symbol, in some countries, the traffic regulation indicated by the road sign is applied to all type of commercial vehicles, but in other countries, the traffic regulation indicated by the road sign is applied to the commercial vehicles having weights equal to or greater than a predetermined weight. In this case, the present invention can be used to enable the driving assistance system to (i) convert the traffic regulation indicated by the road sign to the traffic regulation to be applied to the own vehicle 100 and (ii) notify the driver of the converted traffic regulation, and the present invention can be also used to enable the driving assistance system to determine whether the traffic regulation indicated by the road sign targets the own vehicle 100. In this case, the information providing apparatus 10 is configured not to notify the driver of the traffic regulation when the traffic regulation does not target the own vehicle 100.

Further, in a situation where arithmetic expressions can be used to convert the image-recognized speed limit SLimg and the data speed limit SLdata to the applied speed limit SLapp, the information providing apparatus 10 may be configured to calculate and acquire the applied speed limit SLapp from the image-recognized speed limit SLimg or the data speed limit SLdata, using the arithmetic expressions in place of the converting maps MAP.

Further, in a situation where the vehicle category applied to the same vehicle varies, depending on a utilization patter of the vehicle, for example, whether the vehicle is utilized as the passenger transport vehicle or the cargo transport vehicle, the information providing apparatus 10 may be configured to (i) acquire information on the utilization pattern of the vehicle, (ii) acquire the vehicle category VC applied to the own vehicle 100 in consideration of the acquired information, and (iii) select the converting map MAP dedicated to the acquired vehicle category VC.

## Claims

1. An information providing apparatus (10) comprising an electronic control unit (90) configured to notify an operator of an own vehicle (100) of an applied traffic regulation which is a traffic regulation to be applied to the own vehicle (100),
wherein the electronic control unit (90) is configured to:
acquire an image-recognized traffic regulation by an image recognition of recognizing a captured image of a view ahead of the own vehicle (100),
the image-recognized traffic regulation being the traffic regulation which is displayed in a road sign captured in the captured image and is to be applied to vehicles travelling in a traffic lane where the own vehicle (100) is travelling;
acquire positional information on a current position of the own vehicle (100);
acquire the applied traffic regulation based on (i) the positional information, (ii) the image-recognized traffic regulation, and (iii) vehicle information on an attribute of the own vehicle (100); and
notify the operator of the own vehicle (100) of the acquired applied traffic regulation.

2. The information providing apparatus (10) according to claim 1, wherein the electronic control unit (90) is configured not to notify the operator of the applied traffic regulation when the road sign acquired from the captured image by the image recognition does not target the own vehicle (100) even when the electronic control unit (90) acquires the applied traffic regulation based on the image-recognized traffic regulation acquired from the road sign.

3. The information providing apparatus (10) according to claim 1,
wherein the electronic control unit (90) includes at least one converting device which converts the image-recognized traffic regulation to the applied traffic regulation based on (i) the vehicle information and (ii) the positional information, and
wherein the electronic control unit (90) is configured to acquire the applied traffic regulation by converting the image-recognized traffic regulation by the at least one converting device based on (i) the vehicle information and (ii) the positional information.

4. The information providing apparatus (10) according to claim 1,
wherein the vehicle information includes, as the vehicle information, (i) vehicle application information on an application of the own vehicle (100) and (ii) vehicle specification information on a specification of the own vehicle (100),
wherein the electronic control unit (90) includes converting devices which are prepared for every combination of (i) an application of a vehicle and (ii) a specification of a vehicle and convert the traffic regulation displayed in the road sign to the traffic regulation to be applied to a target vehicle based on a current position of the target vehicle, and
wherein the electronic control unit (90) is configured to:
select, from the converting devices, the converting device dedicated to a combination of (i) the application of the own vehicle (100) and (ii) the specification of the own vehicle (100) based on (i) the vehicle application information and (ii) the vehicle specification information; and
acquire the applied traffic regulation by converting the image-recognized traffic regulation by the selected converting device based on the current position of the own vehicle (100).

5. The information providing apparatus (10) according to claim 1,
wherein the vehicle information includes, as the vehicle information, (i) vehicle application information on an application of the own vehicle (100) and (ii) vehicle specification information on a specification of the own vehicle (100),
wherein the electronic control unit (90) includes converting devices which are prepared for every combination of (i) an application of a vehicle, (ii) a specification of a vehicle, and (iii) a current position of a vehicle and convert the traffic regulation displayed in the road sign to the traffic regulation to be applied to a target vehicle based on a current positions of the target vehicle, and
wherein the electronic control unit (90) is configured to:
select, from the converting devices, the converting device dedicated to a combination of (i) the application of the own vehicle (100), (ii) the specification of the own vehicle (100), and (iii) the current position of the own vehicle (100) based on (i) the vehicle application information, (ii) the vehicle specification information, and (iii) the positional information; and
acquire the applied traffic regulation by converting the image-recognized traffic regulation by the selected converting device based on the current position of the own vehicle (100).

6. The information providing apparatus (10) according to any of claims 3 to 5,
wherein the electronic control unit (90) is configured to change the converting device from a first converting device to a second converting device when the own vehicle (100) moves from a first area into a second area different from the first area,
wherein the first converting device is the converting device which converts the image-recognized traffic regulation to the applied traffic regulation for the first area, and
wherein the second converting device is the converting device which converts the image-recognized traffic regulation to the applied traffic regulation for the second area.

7. The information providing apparatus (10) according to claim 1,
wherein the electronic control unit (90) stores maps which are prepared for every attribute of a vehicle and are used to acquire, as the applied traffic regulation, the traffic regulation to be applied to a target vehicle based on (i) the traffic regulation displayed in the road sign and (ii) a current position of the target vehicle, and
wherein the electronic control unit (90) is configured to:
select, from the stored maps, the map dedicated to the attribute of the own vehicle (100); and
acquire the applied traffic regulation by applying (i) the image-recognized traffic regulation and (ii) the positional information on the own vehicle (100) to the selected map.

8. The information providing apparatus (10) according to claim 1,
wherein the electronic control unit (90) stores maps which are prepared for every combination of (i) an attribute of a vehicle and (ii) a current position of a vehicle and are used to acquire, as the applied traffic regulation, the traffic regulation to be applied to a target vehicle based on (i) the traffic regulation displayed in the road sign and (ii) a current position of the target vehicle, and
wherein the electronic control unit (90) is configured to:
select, from the stored maps, the map dedicated to a combination of (i) the attribute of the own vehicle (100) and (ii) the current position of the own vehicle (100); and
acquire the applied traffic regulation by applying (i) the image-recognized traffic regulation and (ii) the current position of the own vehicle (100) to the selected map.

9. An information providing method for notifying an operator of an own vehicle (100) of an applied traffic regulation which is a traffic regulation to be applied to the own vehicle (100),
wherein the information providing method comprises steps of:
acquiring an image-recognized traffic regulation by an image recognition of recognizing a captured image of a view ahead of the own vehicle (100),
the image-recognized traffic regulation being the traffic regulation which is displayed in a road sign captured in the captured image and is to be applied to vehicles travelling in a traffic lane where the own vehicle (100) is travelling;
acquiring positional information on a current position of the own vehicle (100);
acquiring the applied traffic regulation based on (i) the positional information, (ii) the image-recognized traffic regulation, and (iii) vehicle information on an attribute of the own vehicle (100); and
notifying the operator of the own vehicle (100) of the acquired applied traffic regulation.

10. A computer-readable storage medium storing a vehicle driving assistance program which notifies an operator of an own vehicle (100) of an applied traffic regulation which is a traffic regulation to be applied to the own vehicle (100),
wherein the information providing program is configured to:
acquire an image-recognized traffic regulation by an image recognition of recognizing a captured image of a view ahead of the own vehicle (100),
the image-recognized traffic regulation being the traffic regulation which is displayed in a road sign captured in the captured image and is to be applied to vehicles travelling in a traffic lane where the own vehicle (100) is travelling;
acquire positional information on a current position of the own vehicle (100);
acquire the applied traffic regulation based on (i) the positional information, (ii) the image-recognized traffic regulation, and (iii) vehicle information on an attribute of the own vehicle (100); and
notify the operator of the own vehicle (100) of the acquired applied traffic regulation.
